# EUROPÄISCHE PATENTSCHRIFT

(11) **EP 0 880 881 B1**
(45) Veröffentlichungstag und Bekanntmachung des Hinweises auf die Patenterteilung: **14.08.2002**
(21) Anmeldenummer: 98109282.8
(22) Anmeldetag: 22.05.1998
(51) Int. Cl.: A01D 34/73, A01D 34/82, A01D 75/18

(54) **Kappe, insbesondere Abweiser und Verwendung einer solchen Kappe**
Cap especially deflector and use of such a cap
Jupe en particulier déflecteur et utilisation d'une telle jupe

(30) Priorität: 29.05.1997 US 865286
(43) Veröffentlichungstag der Anmeldung: 02.12.1998
(73) Patentinhaber: DEERE & COMPANY, Moline, Illinois 61265-8098 (US)
(72) Erfinder: Benway, Randy Edward, Horicon, WI 53032 (US)
(74) Vertreter: Magin, Ludwig Bernhard

(56) Entgegenhaltungen:
- US-A- 2 876 609
- US-A- 3 641 749
- US-A- 4 989 398
- John Deere Parts Catalog: PC2399 - STX38, STX46 (Black Mower Deck) Lawn Tractors (USA, 6. October 1994), Seiten 78, 79

## Beschreibung

Die Erfindung bezieht sich auf eine Kappe, insbesondere einen Abweiser, zum unbeweglichen Aufsetzen auf einen Bauteil und mit einer Seitenwand und einem Boden mit einer Öffnung zur Aufnahme des im Querschnitt größeren Bauteils und auf die Verwendung einer solchen Kappe zum Aufsetzen auf einen sich drehenden Bauteil.

Es ist bekannt, Mähgeräte mit Mähmessern auszustatten, die an Spindeln befestigt sind, um mit diesen zu rotieren. Die Spindeln werden von einer Kraftquelle wie einem Motor angetrieben, wobei die Kraftübertragung über einen Mechanismus wie beispielsweise ein Riemengetriebe erfolgt. Wenn das Mähmesser Pflanzen schneidet, werden Abschnitte in die Luft gewirbelt und geraten in der Schneidkammer in die Nähe der Spindel. Lange Abschnitte und anderes fasriges Material kann manchmal durch das rotierende Mähmesser so abgeworfen werden, daß es in Kontakt mit der Spindel kommt. Manchmal neigen die Schnipsel und das fasrige Material dazu, sich selbst um die rotierende Spindel zu wickeln, und binden dadurch die Spindel und die Lager zusammen, so daß es der Spindel erschwert wird, zu rotieren. Wenn sich so genug Material über dem Mähmesser um die Spindel gewickelt oder auf andere Weise zwischen der Spindel, den Lagern und der Schneidkammer verkeilt hat, kann die Spindel durch die Einwirkung des angesammelten Materials am Rotieren gehindert werden. Es kann dann notwendig sein, daß der Bediener den Mähvorgang unterbricht und das angesammelte Material manuell von der Spindel entfernt.

Unter dem Bemühen Material davon abzuhalten, sich während des Mähvorgangs um die Spindel zu wickeln oder auf andere Weise anzusammeln, wurden an der Spindel direkt über dem Mähmesser Abweiser angebracht. Bekannte Abweiser (John Deere M120403) beinhalten oft Böden, die an die obere Oberfläche des Mähmessers angrenzen und eine im allgemeinen zylindrisch geformte Seitenwand aufweisen, die sich von einem Boden aufwärts erstreckt. Der bekannte Abweiser wird durch das Mähmesser, das gegen den Abweiser nach oben drückt, an seinem Platz gehalten. Die Reibung zwischen dem Abweiser und der oberen Oberfläche des Mähmessers verursacht, daß der Abweiser mit der Spindel und dem Mähmesser rotiert. Wenn Abschnitte und anderes fasriges Material, wie beispielsweise Unkrautstengel, während des Mähvorgangs zu der Spindel getrieben werden, wird das Material die Seitenwand des Abweisers berühren und wird so davon abgehalten werden, mit der Spindel und den Lagern in Kontakt zu treten. Wenn sich das Material um den Abweiser wickelt oder ansammelt, wird es nicht auf die Rotation der Spindel einwirken. So wird ein dauerhafter Betrieb ermöglicht, da der Abweiser die Spindel und die Lager gegen Material, das in der Mähkammer des Mähgeräts durch die Luft gewirbelt wird, sperrt oder schützt.

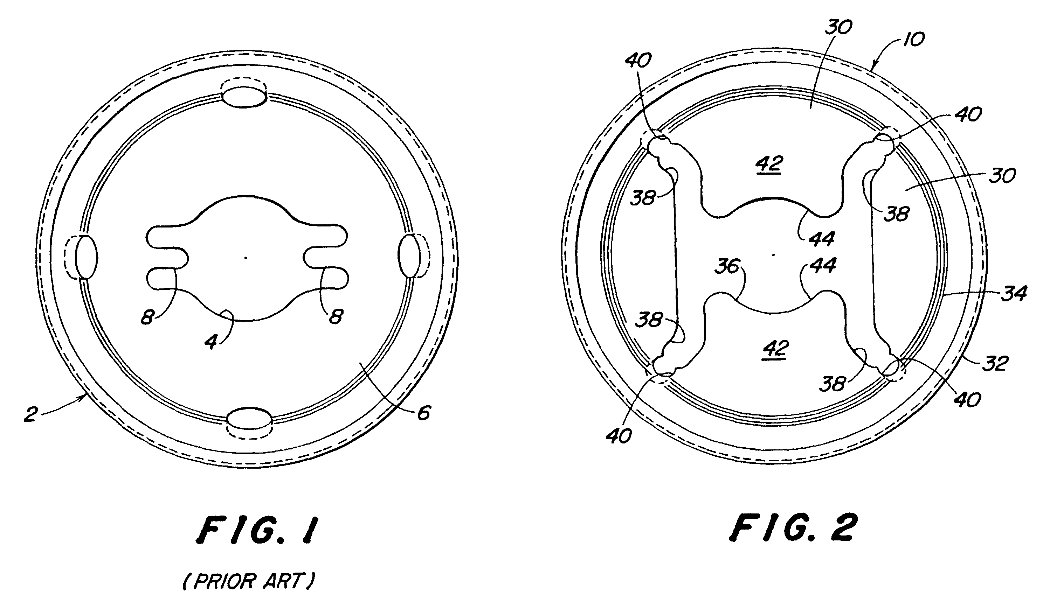

Eine Ausführungsform eines bekannten Abweisers, wie er aus dem JOHN DEERE Ersatzteilkatalog PC 2399 vom 6. Oktober 1994 unter der Stücknummer M120403 bekannt ist, wird mit Bezug auf Fig. 1 der Zeichnung beschrieben.

Das mit der Erfindung zu lösende Problem wird in der dauerhaften Verformung bekannter Abweiser gesehen.

Diese Aufgabe wird erfindungsgemäß durch die Lehre des Patentanspruchs 1 gelöst. Weitere vorteilhafte Ausgestaltungen und Weiterbildungen der Erfindung sowie eine vorteilhafte Verwendung der Erfindung gehen aus den Unteransprüchen hervor.

Die Kappe weist eine Seitenwand und einen Boden mit einer Öffnung zur Aufnahme des im Querschnitt größeren Bauteils auf. Da der Durchmesser der Öffnung im unmontierten Zustand kleiner ist als der Außendurchmesser des Bauteils, muß sich die Öffnung zur Aufnahme des Bauteils vergrößern. Hierzu weist der Boden der Kappe zumindest eine Ausnehmung auf, die sich von der Öffnung zumindest bis annähernd an die Seitenwand erstreckt. Wird der Bauteil bei der Montage in die Öffnung im Boden der Kappe eingebracht, so verformt sich die Seitenwand der Kappe im Endbereich der Ausnehmung, da sie zumindest in diesem Bereich elastisch ausgebildet ist. Die Seitenwand wirkt in diesem Abschnitt in der Art eines Federelements und verspannt die Kappe bzw. den Boden der Kappe gegen das Bauteil, wodurch die Kappe ohne den Einsatz weiterer Befestigungselemente fest auf dem Bauteil aufsitzt. Die Seitenwandung eignet sich aufgrund ihrer Ausdehnung und Form dabei besser zur elastischen Verformung und damit zur Speicherung von Energie als der üblicherweise zumindest annähernd eben ausgebildete Boden der Kappe. Auch bei einer Demontage des Bauteils oder anderer Bauelemente verbleibt die Kappe daher auf dem Bauteil, wodurch ein Herabfallen und/oder Verlieren der Kappe praktisch ausgeschlossen wird. Dies ist besonders hilfreich, wenn andere Bauelemente zu Wartungszwecken von dem Bauteil abgenommen werden, die Kappe aber aufgesetzt bleiben soll. Es ist denkbar, eine erfindungsgemäße Kappe auf bewegte, wie auch auf unbewegte Bauteile aufzusetzen, bei denen eine fest aufsitzende und dabei einfach zu montierende Kappe beispielsweise als Schutz, Abdeckung oder Abweiser an oder für Öffnungen, Lager oder Bauteilverbindungen, wie beispielsweise Verschraubungen etc., benötigt wird.

Um sicherzustellen, daß beim Anbringen der erfindungsgemäßen Kappe auf dem Bauteil nur bzw. zuerst die Seitenwand der Kappe verformt wird, weist der Boden eine höhere Steifigkeit auf als die Seitenwand. Die Steifigkeit kann durch den Querschnitt bzw. durch das Material des Bodens beeinflußt werden. So kann beispielsweise die Wandungsstärke des Bodens größer gewählt werden als die der Seitenwand, es können aber auch Verstrebungen, Kombinationen von Materialien mit unterschiedlichen Elastizitätsmodulen oder Behandlungen, die zu Materialbereichen mit unterschiedlichen Elastizitätsmodulen führen, Verwendung finden.

Zwei Ausnehmungen im Boden, die zwischen sich Fingerelemente einschließen bzw. diese bereichsweise begrenzen, sorgen dafür, daß sich die verschiedenen Bereiche des Bodens bei einer Verformung der Seitenwand gegeneinander verschieben können, wodurch eine gleichmäßigere und einfachere Vergrößerung der Öffnung erzielt wird. Die Fingerelemente schließen die Öffnung im Boden ein und greifen bzw. verspannen den Bauteil im montierten Zustand. Die Fingerelemente können willkürlich oder gleichmäßig über den Umfang verteilt sein, wobei eine symmetrische Verteilung eine gleichmäßige Belastung der einzelnen Fingerelemente ergibt.

Eine gleichmäßige Verformung der Seitenwand der Kappe ergibt sich, wenn die Ausnehmungen im Boden symmetrisch angeordnet sind. Vorzugsweise sind vier Ausnehmungen vorzusehen, die um 90 Grad versetzt angeordnet sind, und die zwischen sich wenigstens zwei Fingerelemente einschließen. Wenn die Fingerelemente so angeordnet sind, daß sie sich im wesentlichen gegenüberliegen, ergibt dies einen noch festeren Sitz des Bauteils.

Zur Anpassung der Fingerelemente an die Form des Bauteils sind die Abschlußkanten der Fingerelemente kurvenförmig ausgebildet. Diese Abschlußkanten bestimmen die Form und die Größe der Öffnung und damit die Punkte oder Bereiche an denen die Fingerelemente im montierten Zustand der Kappe an dem Bauteil angreifen. Weist der Bauteil beispielsweise einen runden oder ovalen Querschnitt auf, so sind die Abschlußbereiche in einem passenden Bogen auszuführen. Es ist aber auch denkbar, die erfindungsgemäße Kappe auf einen Bauteil mit geraden Kanten, beispielsweise mit einem rechteckigen oder anderen winkligen Querschnitt aufzusetzen. Auch hierzu können die Abschlußbereiche an das jeweilige Profil angepaßt werden, um einen festen Sitz der Kappe zu gewährleisten.

Die Seitenwand wirkt im Endbereich wenigstens einer Ausnehmung elastisch. Dies kann dadurch erreicht werden, daß die Seitenwand in diesem Bereich nicht gerade, sondern bogenförmig oder als Winkel ausgeführt wird. Die maximal mögliche Vergrößerung der Öffnung ergibt sich dann aus der Geometrie des Seitenwandbereichs infolge einer Spreizung hin zu einer Geraden. Es ist aber auch vorstellbar, die Seitenwand aus einem dehnbaren Material auszuführen.

Eine gute Federwirkung in Verbindung mit einer einfachen Herstellung ergibt sich, wenn die Seitenwand zumindest teilweise zylindrisch ausgebildet ist

Wird eine erfindungsgemäße Kappe auf einem drehenden Bauteil, vorzugsweise einer Spindel eingesetzt, so kann sie beispielsweise die beschriebene Funktion eines Abweisers oder einer Abdeckung etc. erfüllen, und darüber hinaus einen dauerhaft festen Sitz auf dem drehenden Bauteil gewährleisten.

Durch die Verwendung einer erfindungsgemäßen Kappe auf einer Spindel eines Mähgerätes können Pflanzenstengel, -abschnitte und anderes beim Mähen aufgewirbeltes Material durch die als Abweiser wirkende Kappe von der Spindel und beispielsweise ihrer Lagerung abgehalten werden. Es wird dadurch verhindert, daß sich Material wickelt und die Rotation der Spindel behindert bzw. vollständig unterbindet. Das genannte Mähgerät kann beispielsweise ein Spindelmäher oder ein Sichelmäher sein. Diese können als Teil eines Rasenmähers oder als Teil eines Mähdecks zum Anbau beispielsweise an einen Sitzrasenmäher, Rasentraktor etc. vorgesehen sein. Es ist aber auch denkbar, eine erfindungsgemäße Kappe an anderen Mähgeräten wie beispielsweise an Fadenschneidern einzusetzen.

Anhand der Zeichnung, deren Figur 1 einen bekannten Abweiser und deren Figuren 2 und 3 ein Ausführungsbeispiel der Erfindung zeigen, werden nachfolgend der Stand der Technik und die Erfindung sowie weitere Vorteile und vorteilhafte Weiterbildungen und Ausgestaltungen der Erfindung näher beschrieben und erläutert.

Es zeigt:
- Fig. 1: eine Draufsicht auf einen bekannten Abweiser,
- Fig. 2: eine Draufsicht auf eine erfindungsgemäßen Kappe und

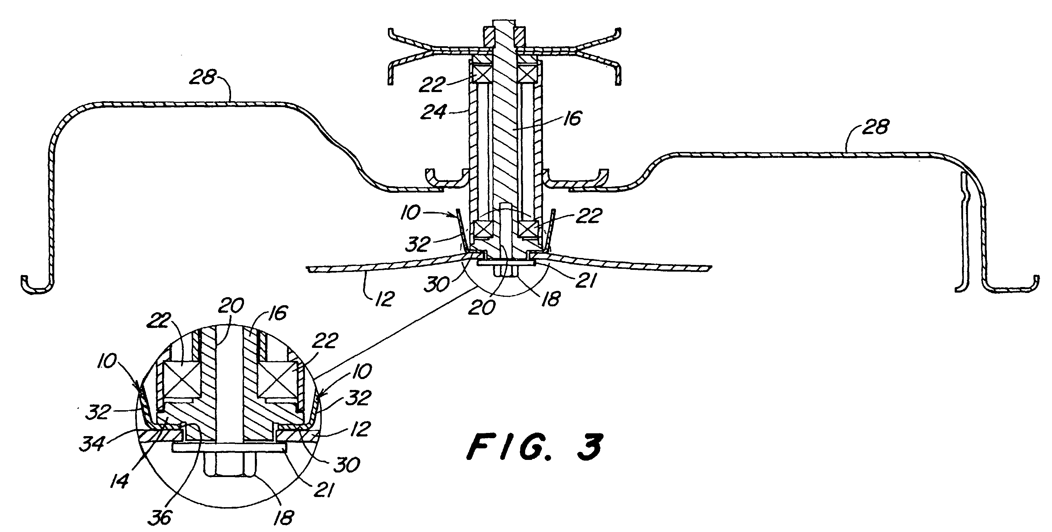

- Fig. 3: einen Schnitt durch die Kappe nach Fig. 2 in seineran eine Mähspindel angebauten Stellung und einen vergrößerten Ausschnitt daraus.

Eine Ausführungsform eines bekannten Abweisers 2 wird in Figur 1 gezeigt und weist eine Öffnung 4 in einem Boden 6 des Abweisers 2 auf, in der eine Spindel angeordnet wird. Ein Paar kurzer Haltelaschen 8 ist, wie in Figur 1 gezeigt, so ausgebildet, daß die Haltelaschen 8 am äußeren Durchmesser der Spindel angreift. Die Haltelaschen 8 verformen sich zumindest leicht, wenn der Abweiser 2 auf die Spindel aufgesetzt wird, wobei diese Verformung der Haltelaschen 8 vorgesehen ist, um einen festen Sitz zwischen der Spindel und dem Abweiser 2 herzustellen. Die Verformung der Haltelaschen 8 verursacht einen festen Sitz der Haltelaschen 8 an verschiedenen Spindeln, die aufgrund großer Fertigungstoleranzen bei der Herstellung der Spindeln einen äußeren Durchmesser von leicht unterschiedlicher Größe aufweisen. Die Verformung der Haltelaschen 8 soll wie eine Feder wirken, welche die Haltelaschen 8 fortwährend gegen die Spindel drückt, so daß der Abweiser 2 auch dann an seinem Platz gehalten wird, wenn ein Mähmesser von der Spindel zur Wartung entfernt wird. Die Haltelaschen 8 sind jedoch verhältnismäßig klein und können sich dauerhaft verformen, wenn sie auf die Spindel montiert werden. Diese dauerhafte oder plastische Verformung der Haltelaschen 8, die entsteht, wenn die Spindel in die Öffnung 4 eingesetzt wird, hindert die Haltelaschen 8 daran, dauerhaft gegen die Spindel zu drücken, so daß die Haltelaschen 8 den Abweiser 2 nicht dauerhaft an der Spindel an seinem Platz halten können.

Es wird Bezug genommen auf die Figuren 2 und 3, in denen eine bevorzugte Ausführungsform gezeigt wird. Es wird eine als Abweiser ausgeführte Kappe 10 gezeigt, die im Betrieb zwischen einem Mähmesser 12 und einer Anlageschulter 14 eines als Spindel ausgeführten drehenden Bauteils 16 angeordnet ist. Ein Gewindebolzen 18 wird durch eine Gewindeöffnung 20 in der Unterseite des Bauteils 16 aufgenommen und preßt eine Unterlegscheibe 21 wirksam gegen das Mähmesser 12 nach oben. Der Gewindebolzen 18 und die Unterlegscheibe 21 drücken wirksam nach oben gegen das Mähmesser 12, das nach oben gegen die Kappe 10 drückt, welche dadurch nach oben gegen die Anlageschulter 14 des drehenden Bauteils 16 gedrückt wird. Die Reibung zwischen dem Gewindebolzen 18, der Unterlegscheibe 21, dem Mähmesser 12, der Kappe 10 und der Anlageschulter 14 hilft, diese Teile zusammenzuhalten, so daß sie während eines Mäheinsatzes gemeinsam rotieren. Der Bauteil 16 wird drehbar vom einem Paar von Lagern 22 aufgenommen, welche in einem Spindelgehäuse 24 angeordnet sind. Das Spindelgehäuse 24 ist an einem Mähgehäuse 28 befestigt, das eine Schneidkammer bestimmt, in der das Mähmesser 12 zum Schneiden von Gras und Pflanzen rotiert.

Die Kappe 10 weist einen Boden 30 und eine Seitenwand 32 auf, die sich von einem radial äußeren Rand 34 des Bodens 30 nach oben erstreckt. Die Seitenwand 32 schützt allgemein den Bauteil 16, das Spindelgehäuse 24 und die Lager 22 vor Pflanzenabschnitten und anderem fasrigen Material, das sich ansonsten um den Bauteil 16 wickeln oder in diesem Bereich ansammeln würde. In dem Boden 30 ist eine Öffnung 36 zur Aufnahme des Bauteils 16 eingeformt. Es sind in dem Boden 30 vier als Schlitze ausgeführte Ausnehmungen 38 vorgesehen, die sich radial nach außen erstrecken. Die Ausnehmungen 38 erstrecken sich über den ganzen Weg zu dem äußeren Rand 34 des Bodens 30. Die Ausnehmungen 38 münden in jeweilige Ablauföffnungen 40, die im unteren Bereich der Seitenwand 32 angeordnet sind. Jeder Flüssigkeit, die sich in der Kappe 10 sammeln kann, wird es ermöglicht, aus der Kappe 10 durch die Ablauföffnungen abzufließen, wodurch ein Rosten oder Abnutzen der Kappe 10, des Bauteils 16 und anderer Teile verhindert wird. Zwischen angrenzenden Ausnehmungen 38 werden durch das Material des Bodens 30 Fingerelemente 42 bestimmt. Die innersten Kanten der Fingerelemente 42 bilden kurvenförmige Abschlußkanten 44. Die Abschlußkanten 44 bestimmen die Öffnung 36, in der der Bauteil 16 während des Mähvorgangs angebracht ist.

Wenn die Kappe 10 auf dem Bauteil 16 angebracht ist, greifen die Abschlußkanten 44 der Fingerelemente 42 an dem äußeren Durchmesser des Bauteils 16 an. Die Öffnung 36 im Boden 30, die durch die Abschlußkanten 44 bestimmt wird, ist etwas kleiner als der äußere Durchmesser des Bauteils 16, wodurch die Kappe 10 leicht verformt wird, wenn das Bauteil 16 während des Zusammenbaus in die Öffnung 36 gepreßt wird. Die Fingerelemente 42 werden von einer passenden Menge von Material gebildet und sind von solcher Ausdehnung und Gestalt, daß eine Verformung der Fingerelemente 42 selbst während des Zusammenbaus verhindert wird. Die Seitenwand 32 wird sich leicht verformen oder verbiegen, wenn der Bauteil 16 in die Öffnung 36 eingesetzt wird, wobei diese Verformung oder Verbiegung der Seitenwand 32 bewirkt, daß die Fingerelemente 42 sich leicht aus ihrer Position vor der Montage verschieben, um so die Größe der Öffnung 36 zur Anpassung an den Bauteil 16 zu vergrößern. Die Seitenwand 32 verformt oder verbiegt sich leicht und erlaubt so den Fingerelementen 42, sich leicht zu verschieben, was Spielraum für den Bauteil 16 verschafft, wenn der Bauteil 16 in die Öffnung 36 gepreßt wird. Die Fingerelemente 42 selbst verformen sich daher nicht, statt dessen verformt oder verbiegt sich die Seitenwand 32, um den Spielraum zu schaffen, der für den Bauteil 16 notwendig ist, um in die Öffnung 36 zu gelangen. Die Fingerelemente 42 verschieben sich nur leicht, wenn sich die Seitenwand 32 verbiegt, und dabei die Größe der Öffnung 36 erweitert, wenn der Bauteil 16 während des Zusammenbaus in die Öffnung 36 gepreßt wird. Das Vorhandensein der Ausnehmungen 38, welche sich in dem bevorzugten Ausführungsbeispiel von der Öffnung 36 radial nach außen zur Seitenwand 32 erstrecken, wie auch die Größe und Gestalt der Fingerelemente 42 helfen, die Seitenwand 32 dazu zu bringen, sich anstelle des Bodens 30 zu verbiegen.

Die Seitenwand 32 ist im allgemeinen zylindrisch ausgebildet und ist gut geeignet, sich elastisch zu verbiegen und dabei Energie ähnlich einer Feder zu speichern. Dieser federähnliche Effekt, der durch das elastische Verbiegen der Seitenwand 32 verursacht wird, spannt die Abschlußkanten 44 der Fingerelemente 42 gegen die Spindel 16 vor. Die Kappe 10 wird dadurch auch dann an ihrem Platz gehalten, wenn das Mähmesser 12 von dem Bauteil 16 abgenommen wird. Die im allgemeinen zylindrische Gestalt der Seitenwand 32 ist im allgemeinen besser geeignet, durch elastisches Verbiegen Energie zu speichern, als die flache Oberfläche des Bodens 30. Die im allgemeinen zylindrische Gestalt der Seitenwand 32 kann allgemein durch Verbiegen mehr Energie speichern, als die flache Oberfläche des Bodens 30, ohne sich plastisch oder dauerhaft zu verformen. Daher ist die Seitenwand 32 gut geeignet, Bereiche der Kappe 10 gegen den Bauteil 16 vorzuspannen, ohne plastischer Verformung ausgesetzt zu sein. Die Kappe 10 ist daher entsprechend der bevorzugten Ausführungsform gut geeignet, sich selbst an dem Bauteil 16 zu halten, auch wenn das Mähmesser 12 entfernt ist.

## Patentansprüche

1. Kappe, insbesondere Abweiser, zum unbeweglichen Aufsetzen auf einen Bauteil (16) und mit einer Seitenwand (32) und einem Boden (30) mit einer Öffnung (36) zur Aufnahme des im Querschnitt größeren Bauteils (16), **dadurch gekennzeichnet, daß** der Boden (30) zumindest eine Ausnehmung (38) aufweist, die sich von der Öffnung (36) zumindest bis annähernd an die Seitenwand (32) erstreckt, und daß die Seitenwand (32) zumindest im Endbereich der Ausnehmung (38) elastisch verformbar ausgebildet ist.

2. Kappe nach Anspruch 1, **dadurch gekennzeichnet, daß** der Boden (30) eine höhere Steifigkeit aufweist als die Seitenwand (32).

3. Kappe nach einem der vorherigen Ansprüche, **dadurch gekennzeichnet, daß** der Boden (30) wenigstens zwei Ausnehmungen (38) aufweist, die Fingerelemente (42) im Boden (30) wenigstens bereichsweise begrenzen.

4. Kappe nach einem der vorherigen Ansprüche, **dadurch gekennzeichnet, daß** der Boden (30) vier Ausnehmungen (38) aufweist, die vorzugsweise um etwa 90° versetzt angeordnet sind und die wenigstens zwei Fingerelemente (42) begrenzen.

5. Kappe nach einem der vorherigen Ansprüche, **dadurch gekennzeichnet, daß** die Fingerelemente (42) kurvenförmige Abschlußkanten (44) aufweisen, die die Form und die Größe der Öffnung (36) bestimmen.

6. Kappe nach einem der vorherigen Ansprüche, **dadurch gekennzeichnet, daß** die Seitenwand (32) zumindest im Endbereich mindestens einer Ausnehmung (38) nicht gerade ist.

7. Kappe nach einem der vorherigen Ansprüche, **dadurch gekennzeichnet, daß** die Seitenwand (32) zumindest teilweise zylindrisch ausgebildet ist.

8. Verwendung einer Kappe nach einem der Ansprüche 1 bis 7 zum Aufsetzen auf einen sich drehenden Bauteil (16), vorzugsweise eine Spindel.

9. Verwendung nach Anspruch 8, **dadurch gekennzeichnet, daß** der drehende Bauteil (16) eine mit einem Schneidwerkzeug wirksam in Verbindung stehende Spindel eines Mähgerätes ist.

## Claims

1. A cap, especially a deflector, for fitting immovably on a component (16) and with a sidewall (32) and a bottom (30) with an opening (36) for receiving the component (16) of larger cross-section, **characterized in that** the bottom (30) has at least one recess (38), which extends from the opening (36) at least approximately to the sidewall (32), and **in that** the sidewall (32) is elastically deformable at least in the end region of the recess (38).

2. A cap according to claim 1, **characterized in that** the bottom (30) has greater stiffness than the sidewall (32).

3. A cap according to either of the preceding claims, **characterized in that** the bottom (30) has at least two recesses (38), which at least locally bound finger elements (42) in the bottom (30).

4. A cap according to any of the preceding claims, **characterized in that** the bottom (30) has four recesses (38), which are preferably offset by about 90° and which bound at least two finger elements (42).

5. A cap according to any of the preceding claims, **characterized in that** the finger elements (42) have curved terminal edges (44) which determine the shape and size of the opening (36).

6. A cap according to any of the preceding claims, **characterized in that** the sidewall (32) is not straight **at least** in the end region of at least one recess (38).

7. A cap according to any of the preceding claims, **characterized in that** the sidewall (32) is at least partially of cylindrical form.

8. Use of a cap according to any of claims 1 to 7 for **mounting on** a rotating component (16), preferably a spindle.

9. Use according to claim 8, **characterized in that** the rotating component (16) is a spindle of a mower connected to operate a cutting tool.

## Revendications

1. Jupe, en particulier déflecteur, destinée à être posée de façon immobile sur un élément de construction (16) et avec une paroi latérale (32) et un fond (30) avec une ouverture (36) destinée à loger l'élément de construction (16) de plus grand diamètre, **caractérisée en ce que** le fond (30) présente au moins un évidement (38), qui s'étend de l'ouverture (36) au moins jusque approximativement la paroi latérale (32), et **en ce que** la paroi latérale (32) est réalisée de façon élastique déformable au moins dans la zone d'extrémité de l'évidement (38).

2. Jupe selon la revendication 1, **caractérisée en ce que** le fond (30) présente une rigidité supérieure à la paroi latérale (32).

3. Jupe selon l'une quelconque des revendications précédentes, **caractérisée en ce que** le fond (30) présente au moins deux évidements (38), qui délimitent des éléments de doigts (42) dans le fond (30) au moins par zones.

4. Jupe selon l'une quelconque des revendications précédentes, **caractérisée en ce que** le fond (30) présente quatre évidements (38) qui sont disposés de préférence décalés d'environ 90° et qui délimitent au moins deux éléments de doigts (42).

5. Jupe selon l'une quelconque des revendications précédentes, **caractérisée en ce que** les éléments de doigts (42) présentent des arêtes de fermeture (44) en forme de came, qui déterminent la forme et la grandeur de l'ouverture (36).

6. Jupe selon l'une quelconque des revendications précédentes, **caractérisée en ce que** la paroi latérale (32) n'est pas droite dans la zone d'extrémité d'au moins un évidement (38).

7. Jupe selon l'une quelconque des revendications précédentes, **caractérisée en ce que** la paroi latérale (32) est réalisée au moins partiellement dans une forme cylindrique.

8. Utilisation d'une jupe selon l'une quelconque des revendications 1 à 7 à poser sur un élément de construction (16) rotatif, de préférence une broche.

9. Utilisation selon la revendication 8, **caractérisée en ce que** l'élément de construction (16) rotatif est une broche d'une faucheuse qui est en liaison efficace avec un outil de coupe.
